# EUROPÄISCHE PATENTSCHRIFT

(11) **EP 1 185 430 B1**
(45) Veröffentlichungstag und Bekanntmachung des Hinweises auf die Patenterteilung: **19.04.2006**
(21) Anmeldenummer: 00991562.0
(22) Anmeldetag: 22.12.2000
(51) Int. Cl.: B60K 25/00

(54) **ANTRIEBSVORRICHTUNG FÜR WENIGSTENS EIN NEBENAGGREGAT**
DRIVE DEVICE FOR AT LEAST ONE AUXILIARY UNIT
DISPOSITIF D'ENTRAINEMENT POUR AU MOINS UN GROUPE AUXILIAIRE

(30) Priorität: 10.03.2000 DE 10011343
(43) Veröffentlichungstag der Anmeldung: 13.03.2002
(73) Patentinhaber: ROBERT BOSCH GMBH, 70442 Stuttgart (DE)
(72) Erfinder: WEHRLE, Nicole, 71686 Remseck (DE); GLAUNING, Juergen, 71711 Steinheim (DE)
(86) Internationale Anmeldenummer: PCT/DE2000/004614
(87) Internationale Veröffentlichungsnummer: WO 2001/066375

(56) Entgegenhaltungen:
- EP-A- 0 645 271
- DE-A- 19 621 337
- DE-A- 19 748 423

## Beschreibung

### Stand der Technik

Aus der deutschen Offenlegungsschrift DE 196 213 37 A1 ist eine Antriebsvorrichtung für wenigstens ein Nebenaggregat bekannt, bei dem der Antrieb der Nebenaggregate über die Getriebeeingangswelle und nachfolgende Getriebeelemente erfolgt. Eines der Nebenaggregate kann beispielsweise ein Klimakompressor sein, bei dem der Antrieb entweder über die Antriebsräder des rollenden Fahrzeugs oder die Brennkraftmaschine erfolgt.

Diese Anordnung hat den Nachteil, daß bei Stillstand der Brennkraftmaschine der Klimakompressor nicht angetrieben wird. Damit ist nachteilig verbunden, daß eine Klimatisierung des Fahrgastinnenraums zwingend den Betrieb der Brennkraftmaschine erfordert. Unerwünscht ist dies beispielsweise im Stau, bei dem man aus Energieersparnisgründen angehalten ist, die Brennkraftmaschine abzuschalten.

Darüber hinaus ist dies beispielsweise auch von Nachteil, wenn das Fahrzeug nach dem sogenannten Start/Stop-Prinzip gebaut ist. Start/Stop-Prinzip bedeutet, daß die Brennkraftmaschine im Fahrzeugbetrieb dann abgeschaltet wird, wenn diese zum Antrieb nicht notwendig ist. Dies ist beispielsweise dann der Fall, wenn beim Halten des Fahrzeugs beispielsweise an einer Ampelanlage die Brennkraftmaschine automatisch ausgeschaltet wird.

Aus der deutschen Offenlegungsschrift DE 197 48 423 A1 ist eine Antriebsvorrichtung für wenigstens ein Nebenaggregat, insbesondere für Kraftfahrzeuge, bekannt. Diese Antriebsvorrichtung weist u.a. eine Antriebsmaschine auf, die über eine Antriebswelle ein Nebenaggregat antreibt. Das Nebenaggregat ist einer ersten Kupplung nachgeordnet und durch zumindest ein der Fahrtantriebsseite der Antriebswelle nachgeordnetes Getriebeelement antreibbar. Eine elektrische Maschine ist mit einem Rotor und einem Stator zwischen der ersten Kupplung und dem Fahrgetriebe angeordnet.

### Vorteile der Erfindung

Eine hinsichtlich der Anordnung und des Antriebs des Nebenaggregats vorteilhafte Anordnung ergibt sich dann, wenn das Nebenaggregat mittels einer Welle angetrieben ist, die durch eine als Hohlwelle ausgeführte Getriebeeingangswelle des Fahrgetriebes hindurchgeführt ist. Dadurch ist es möglich, bisher für einen Klimakompressor nicht nutzbaren Bauraum zu nutzen. Ein weiterer Vorteil dieser Anordnung ist, daß das Fahrgetriebe nicht im Leerlauf geschaltet sein muß. Dies ermöglicht ohne vorherige Schaltvorgänge im Getriebe und der Kupplung des Klimakompressors ein sofortiges Anfahren des Fahrzeugs.

Durch die in den Unteransprüchen aufgeführten Maßnahmen ergeben sich vorteilhafte Weiterbildungen und Verbesserungen der im unabhängigen Anspruch angegebenen Merkmale.

Ordnet man zwischen der elektrischen Maschine und dem Fahrgetriebe eine zweite Kupplung an, so ermöglicht diese zweite Kupplung in Kombination mit der ersten Kupplung ein bloßes Antreiben des Klimakompressors mittels der elektrischen Maschine.

Der Antrieb des Nebenaggregats ist einfach zu verwirklichen, in dem beispielsweise ein Zahnradgetriebe oder Riemengetriebe von dem zumindest einen Getriebeelement umfaßt wird.

Durch die Anordnung des Nebenaggregats in einem Nebenaggregatgehäuse, das an das Fahrgetriebe angeflanscht ist, ist eine einfache Kühlung des Fahrgetriebes zu realisieren.

Mittels einer Zwischenwelle kann einerseits eine günstige Übersetzung zwischen einem antreibenden Getriebeelement und dem Nebenaggregat und andererseits auch eine günstigere Lage des Nebenaggregats erreicht werden.

Vorteilhaft in der Gesamtkombination der Antriebsvorrichtung aus Brennkraftmaschine, Fahrgetriebe und Klimakompressor ist, wenn die elektrische Maschine ein sogenannter Startergenerator ist.

### Zeichnungen

Die Erfindung wird nachstehend in mehreren Ausführungsbeispielen anhand der zugehörigen Zeichnungen näher erläutert. Es zeigen
Figur 1 eine schematische Darstellung eines ersten Ausführungsbeispiels der erfindungsgemäßen Vorrichtung mit einem durch die als Hohlwelle ausgeführte Getriebeeingangswelle durchgeführten Getriebeelement,
Figur 2 zeigt ein viertes Ausführungsbeispiel,
Figur 3 zeigt ein erstes Lagerungsbeispiel für den Rotor der elektrischen Maschine,
Figur 4 zeigt ein zweites Lagerungsbeispiel für den Rotor der elektrischen Maschine.

Identische bzw. gleichwirkende Bauteile sind mit gleichen Bezugszeilen bezeichnet.

### Beschreibung

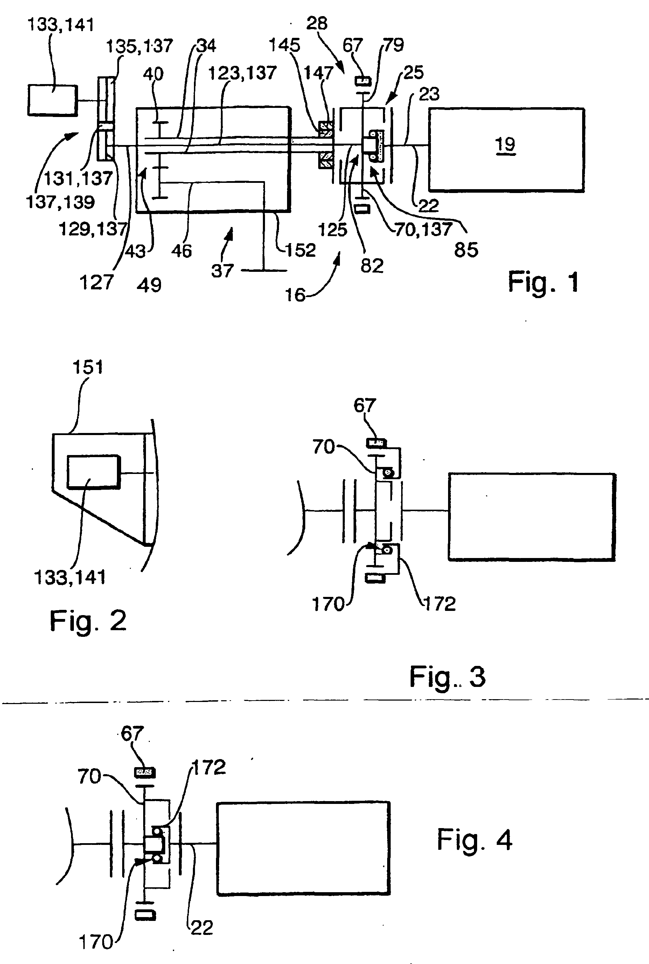

Figur 1 zeigt das erste Ausführungsbeispiel der erfindungsgemäßen Antriebsvorrichtung 16. Eine Antriebsmaschine 19 hat eine Antriebswelle 22. Die Antriebsmaschine 19 ist typischerweise eine Brennkraftmaschine. Die Antriebswelle 22 hat eine Fahrantriebseite 23 und ist über eine erste Kupplung 25 mit einer elektrischen Maschine 28 verbindbar. Über eine zweite Kupplung 31 ist die elektrische Maschine 28 mit einer Getriebeeingangswelle 34 eines Fahrgetriebes 37 verbindbar. Dazu ist ein erstes Ende 145 der Getriebeeingangswelle 34 mit einem Mitnehmer 147 der zweiten Kupplung 31 drehfest verbunden.

Die zweite Kupplung 31 ist damit zwischen der elektrischen Maschine 28 und dem Fahrgetriebe 37 angeordnet.

Auf der Getriebeeingangswelle 34 sind axial beanstandet verschiedene Ritzelverzahnungen 40 eingearbeitet oder befestigt, die mit entsprechenden Abtriebsverzahnungen 43 kämmen. Die einzelnen sich axial gegenüberliegenden Ritzelverzahnungen 40 bzw. Abtriebsverzahnungen 43 bilden Ritzelpaare und damit jeweils einen wählbaren Gang. Die Abtriebsverzahnungen 43 sind auf einer Abtriebswelle 46 befestigt, die an einem Ende ein Abtriebsritzel zum Übertragen eines Drehmoments auf ein Differenzialgetriebe hat. Über ein Differenzialritzel des Differenzialgetriebes sind zwei Radantriebeswellen zum Antreiben zweier nicht dargestellter Räder angeordnet. Durch eine Gangwählvorrichtung des Fahrgetriebes 37 ist es möglich, die verschiedenen Paare aus Ritzelverzahnungen 40 und Abtriebsverzahnungen 43 mit einzelnen Schaltklauen einzustellen.

Die elektrische Maschine 28 weist einen Stator 67 und einen Rotor 70 auf und ist ein sogenannter Startergenerator. Der Rotor 70 hat einen Rotorteller 79 verbunden ist. Der Rotorteller 79 hat einen Rotorwellenzapfen 82, der in einem Wälzlager 85 gelagert ist. Das Wälzlager 85 ist mit der Antriebswelle 22 verbunden und mit diesem befestigt. Die elektrische Maschine 28 ist damit mit ihrem Rotor 70 und ihrem Stator 67 zwischen der ersten Kupplung 25 und dem Fahrgetriebe 37 angeordnet.

Durch die wie bekannte Reibungskupplungen betätigbare erste Kupplung 25 ist eine reibschlüssige Verbindung zwischen dem Rotor 70 und der Antriebswelle 22 herstellbar. In gleicher Weise funktioniert die zweite Kupplung 31 zwischen dem Rotor 70 und der Getriebeeingangswelle 34.

Im dargestellten Ausführungsbeispiel ist die Getriebeeingangswelle 34 als Hohlwelle ausgeführt. Innerhalb der Getriebeeingangswelle 34 ist eine Welle 123 hindurchgeführt, die mit ihrem ersten Ende 125 mit dem Rotorteller 79 drehfest verbunden ist. Ein zweites Ende 127 der Welle 123 ragt aus der Getriebeeingangswelle 34 heraus.

An diesem zweiten Ende 127 der Welle 123 ist eine Riemenscheibe 129 angeordnet, die über einen Riemen 131 und eine an einem Nebenaggregat 133 angeordnete Riemenscheibe 135 das Nebenaggregat 133 antreibt. Das Nebenaggregat 133 wird damit mittels mehrerer Getriebeelemente 137 angetrieben. Getriebeelemente sind für alle Ausführungsbeispiele die Antriebsteile, die der Fahrantriebseite 23 der Antreibswelle 22 nachgeordnet sind und das Nebenaggregat 133 antreiben. Zu diesen Getriebeelementen 137 gehören der Rotor 70 mit seinem Rotorteller 79, die mit dem Rotorteller 79 drehfest verbundene Welle 123, die Riemenscheiben 129 und 135 sowie der Riemen 131. Das Nebenaggregat 133 ist der ersten Kupplung 25 nachgeordnet und durch der Fahrantriebsseite 23 der Antriebswelle 22 nachgeordnete Getriebeelemente 137 antreibbar.

Das zumindest eine Getriebeelement 137 umfaßt zum Antrieb des Nebenaggregats 133 damit einen Riementrieb 139.

Mit Hilfe dieser im ersten Ausführungsbeispiel beschriebenen Antriebsvorrichtung sind verschiedene Fahrzustände bei gleichzeitiger Klimatisierung des Fahrgastinnenraums möglich. Rollt beispielsweise das Fahrzeug, in dem diese Antriebsvorrichtung vorgesehen ist, mit ausgeschalteter Antriebsmaschine 19, offener erster Kupplung 25 und ebenso nicht antreibender elektrischer Maschine 28 und einem im Fahrgetriebe 37 eingelegten Gang bei geschlossener zweiter Kupplung 31 einen Hang hinab, so wird über die Antriebsräder, das Differenzialgetriebe, das Differenzialritzel, ein Abtriebsritzel 49, die Getriebeeingangswelle 34 und die zweite Kupplung 31 der Rotor 70 angetrieben. Dadurch ist einerseits ein generatorischer Betrieb der elektrischen Maschine 28 und damit eine Energierückgewinnung (Rekuperation) möglich.

Durch den generatorischen.Betrieb der elektrischen Maschine 28 wird eine Akkumulatorbatterie, die hier nicht dargestellt ist, aufgeladen. Andererseits wird durch die Ankopplung des Nebenaggregats 133 über die Getriebeelemente 137 mit dem Rotorteller 79 bzw. dem Rotor 70 dieses Nebenaggregat 133 angetrieben. Ist das Nebenaggregat 133 ein Klimakompressor 141, so ist bei ausgeschalteter Antriebsmaschine 19 eine Innenraumklimatisierung durch den Klimakompressor 141 möglich.

Auch im rein elektrischen Fahrbetrieb, d. h. bei abgeschalteter Antriebsmaschine 19, geöffneter erster Kupplung 25 und motorisch betriebener elektrischer Maschine 28, ist bei gleichzeitigem elektrischen Fahrbetrieb eine Innenraumklimatisierung mittels des Klimakompressors 141 wie in bereits zuvor geschilderter Weise möglich.

Eine Innenraumklimatisierung ist auch dann möglich, wenn mittels der elektrischen Maschine 28 das Fahrzeug angetrieben wird und gleichzeitig mittels geschlossener erster Kupplung 25 die Antriebsmaschine 19 geschleppt wird.

Steht das Fahrzeug, beispielsweise vor einer Ampel oder im Stau, und die Antriebsmaschine 19 ist abgeschaltet, so ist bei offener erster Kupplung 25 und zumindest teilweise geladener Akkumulatorbatterie ein elektrischer Antrieb des Klimakompressors 141 und damit eine sogenannte Standklimatisierung mittels der elektrischen Maschine 28 möglich.

Darüber hinaus ist auch ein rein mechanischer Antrieb des Nebenaggregats 131 bzw. des Klimakompressors 141 durch die Antriebsmaschine 19 möglich. Dies kann beispielsweise erforderlich sein, wenn die Akkumulatorbatterie nur gering oder gar nicht aufgeladen ist. Das Nebenaggregat 131 wird dann über die Antriebsmaschine 19, die geschlossene erste Kupplung 25, den Rotorteller 70, bzw. - bei gleichzeitig geöffneter zweiter Kupplung 31 - über die Getriebeelemente 137 betrieben. Auch auf diese Weise ist eine sogenannte Standklimatisierung möglich.

In Figur 2 ist ausschnittweise ein weiteres Ausführungsbeispiel dargestellt. Das Nebenaggregat 133 bzw. der Klimakompressor 141 ist in einem Nebenaggregatsgehäuse 151 untergebracht, das direkt an ein Fahrgetriebegehäuse 152 angeflanscht ist.

Figur 3 zeigt schematisch die Lagerung des Rotors 70. Hier liegt eine sogenannte Eigenlagerung vor, das heißt, der Rotor 70 ist über ein Lager 170 mittels einer mit dem Stator 67 fest verbundenen Lageraufnahme 172 am Stator gelagert.

Figur 4 zeigt schematisch eine weitere Lagerung des Rotors 70. Hier liegt eine sogenannte Fremdlagerung vor, das heißt, der Rotor 70 ist über ein Lager 170 mittels einer mit der Antriebswelle 22 fest verbundenen Lageraufnahme 172 am Stator gelagert.

## Patentansprüche

1. Antriebsvorrichtung mit wenigstens einem Nebenaggregat (133), insbesondere für Kraftfahrzeuge, mit einer eine Antriebswelle (22) mit einer Fahrantriebsseite (23) aufweisenden Antriebsmaschine (22), insbesondere Brennkraftmaschine, wobei das Nebenaggregat (133) einer ersten Kupplung (25) nachgeordnet ist und durch zumindest ein der Fahrantriebsseite (23) der Antriebswelle (22) nachgeordnetes Getriebeelement (137, 70, 79, 143, 139) antreibbar ist, wobei eine elektrische Maschine (28) mit einem Rotor (70) und einem Stator (67) zwischen der ersten Kupplung (25) und einem Fahrgetriebe (37) angeordnet ist und das Nebenaggregat (133) mittels mindestens einem mit dem Rotor (70) verbundenen Getriebeelement (137, 70, 79, 143, 139) antreibbar ist, **dadurch gekennzeichnet, daß** das mindestens eine Getriebeelement (137, 70, 79, 143, 139) eine Welle (123) ist, die durch eine als Hohlwelle ausgeführte Getriebeeingangswelle (34) eines Fahrgetriebes (37) hindurchgeführt ist.

2. Antriebsvorrichtung nach Anspruch 1, **dadurch gekennzeichnet, daß** zwischen der elektrischen Maschine (28) und dem Fahrgetriebe (37) eine zweite Kupplung (31) angeordnet ist.

3. Antriebsvorrichtung nach einem der vorhergehenden Ansprüche, **dadurch gekennzeichnet, daß** das zumindest eine Getriebeelement (137, 70, 79, 143, 139) zum Antrieb des Nebenaggregats (133) ein Zahnradgetriebe (143) umfaßt.

4. Antriebsvorrichtung nach Anspruch 1 oder 2, **dadurch gekennzeichnet, daß** das zumindest eine Getriebeelement (137, 70, 79, 143, 139) zum Antrieb des Nebenaggregats (133) einen Riementrieb (139) umfaßt.

5. Antriebsvorrichtung nach einem der vorhergehenden Ansprüche, **dadurch gekennzeichnet, daß** das Nebenaggregat (133) ein Klimakompressor (144) ist.

6. Antriebsvorrichtung nach einem der vorhergehenden Ansprüche, **dadurch gekennzeichnet, daß** das Nebenaggregat (133) in einem Nebenaggregatsgehäuse (151) untergebracht, das direkt an ein Fahrgetriebegehäuse (152) angeflanscht ist.

7. Antriebsvorrichtung nach einem der vorhergehenden Ansprüche, **dadurch gekennzeichnet, daß** die elektrische Maschine (28) ein Startergenerator ist.

8. Antriebsvorrichtung nach einem der vorhergehenden Ansprüche, **dadurch gekennzeichnet, daß** der Rotor (70) der elektrische Maschine (28) eigengelagert ist.

9. Antriebsvorrichtung nach einem der vorhergehenden Ansprüche, **dadurch gekennzeichnet, daß** der Rotor (70) der elektrische Maschine (28) fremdgelagert ist.

## Claims

1. Drive device having at least one auxiliary unit (133), in particular for motor vehicles, having a drive machine (22), in particular an internal combustion engine, which has a driveshaft (22) with a travelling drive side (23), the auxiliary unit (133) being arranged after a first clutch (25) and it being possible to drive the said auxiliary unit (133) by at least one transmission element (137, 70, 79, 143, 139) which is arranged behind the travelling drive side (23) of the drive shaft (22), an electric machine (28) with a rotor (70) and a stator (67) being arranged between the first clutch (25) and a drive transmission (37), and it being possible to drive the auxiliary unit (133) by means of at least one transmission element (137, 70, 79, 143, 139) which is connected to the rotor (70), **characterized in that** the at least one transmission element (137, 70, 79, 143, 139) is a shaft (123) which is guided through a transmission input shaft (34) of a drive transmission (37), which transmission input shaft (34) is configured as a hollow shaft.

2. Drive device according to Claim 1, **characterized in that** a second clutch (31) is arranged between the electric machine (28) and the drive transmission (37).

3. Drive device according to one of the preceding claims, **characterized in that** the at least one transmission element (137, 70, 79, 143, 139) comprises a gear mechanism (143) for driving the auxiliary unit (133).

4. Drive device according to Claim 1 or 2, **characterized in that** the at least one transmission element (137, 70, 79, 143, 139) comprises a belt drive (139) for driving the auxiliary unit (133).

5. Drive device according to one of the preceding claims, **characterized in that** the auxiliary unit (133) is an air-conditioning compressor (144).

6. Drive device according to one of the preceding claims, **characterized in that** the auxiliary unit (133) is accommodated in an auxiliary-unit housing (151) which is flange-connected directly to a drive-transmission housing (152).

7. Drive device according to one of the preceding claims, **characterized in that** the electric machine (28) is a starter generator.

8. Drive device according to one of the preceding claims, **characterized in that** the rotor (70) of the electric machine (28) has a dedicated mounting.

9. Drive device according to one of the preceding claims, **characterized in that** the rotor (70) of the electric machine (28) has a driveshaft mounting.

## Revendications

1. Dispositif d'entraînement comprenant au moins un groupe auxiliaire (133), notamment pour véhicules automobiles, et un moteur d'entraînement (19), notamment un moteur à combustion interne, présentant un arbre d'entraînement (22) avec un côté d'entraînement (23), le groupe auxiliaire (133) étant disposé en aval d'un premier embrayage (25), et étant entraîné par au moins un élément de transmission (137, 70, 79, 143, 139) disposé en aval du côté d'entraînement (23) de l'arbre d'entraînement (22), alors qu'un moteur électrique (28) avec un rotor (70) et un stator (67) est disposé entre le premier embrayage (25) et une boîte de vitesses (37), le groupe auxiliaire (133) pouvant être entraîné au moyen d'au moins un élément de transmission (137, 70, 79, 143, 139) relié au rotor (70),
**caractérisé en ce que**
l'au moins un élément de transmission (137, 70, 79, 143, 139) est un arbre (123) qui traverse un arbre d'entrée de transmission (34) de la boîte de vitesses (37) formé comme un arbre creux.

2. Dispositif d'entraînement selon la revendication 1,
**caractérisé en ce qu'**
un deuxième embrayage (31) est disposé entre le moteur électrique (28) et la boîte de vitesses (37).

3. Dispositif d'entraînement selon l'une des revendications précédentes,
**caractérisé en ce que**
l'au moins un élément de transmission (137, 70, 79, 143, 139) pour entraîner le groupe auxiliaire (133) comprend un engrenage (143).

4. Dispositif d'entraînement selon la revendication 1 ou 2,
**caractérisé en ce que**
l'au moins un élément de transmission (137, 70, 79, 143, 139) pour entraîner le groupe auxiliaire (133) comprend un entraînement à courroie (139).

5. Dispositif d'entraînement selon l'une des revendications précédentes,
**caractérisé en ce que**
le groupe auxiliaire (133) est un compresseur de climatisation (144).

6. Dispositif d'entraînement selon l'une des revendications précédentes,
**caractérisé en ce que**
le groupe auxiliaire (133) est installé dans un boîtier de groupe auxiliaire (151) bridé directement sur un boîtier de transmission (152).

7. Dispositif d'entraînement selon l'une des revendications précédentes,
**caractérisé en ce que**
le moteur électrique (28) est un démarreur-générateur.

8. Dispositif d'entraînement selon l'une des revendications précédentes,
**caractérisé en ce que**
le rotor (70) du moteur électrique (28) est auto-portant.

9. Dispositif d'entraînement selon l'une des revendications précédentes,
**caractérisé en ce que**
le rotor (70) du moteur électrique (28) est sur paliers séparés.
